Europäisches Patentamt

European Patent Office

Office européen des brevets

(19)

(11) Veröffentlichungsnummer: **0 501 970 B1**

(12) **EUROPÄISCHE PATENTSCHRIFT**

(45) Veröffentlichungstag der Patentschrift: **25.05.94**

(51) Int. Cl.5: **C09D 5/44**

(21) Anmeldenummer: **90915448.6**

(22) Anmeldetag: **27.10.90**

(86) Internationale Anmeldenummer:
**PCT/EP90/01922**

(87) Internationale Veröffentlichungsnummer:
**WO 91/08266 (13.06.91 91/13)**

(54) **VERFAHREN ZUM BESCHICHTEN ELEKTRISCH LEITFÄHIGER SUBSTRATE UND KATHODISCH ABSCHEIDBARER WÄSSRIGER ELEKTROTAUCHLACK.**

(30) Priorität: **24.11.89 DE 3938883**

(43) Veröffentlichungstag der Anmeldung:
**09.09.92 Patentblatt 92/37**

(45) Bekanntmachung des Hinweises auf die
Patenterteilung:
**25.05.94 Patentblatt 94/21**

(84) Benannte Vertragsstaaten:
**AT BE CH DE DK ES FR GB IT LI NL SE**

(56) Entgegenhaltungen:
**WO-A-87/02717**
**DE-A- 2 101 577**

**Database wpil, no. 83-847342, Publlications Ltd., London, GB; & JP-A-58 193 395**

(73) Patentinhaber: **BASF Lacke + Farben AG**
**Glasuritstrasse 1**
**D-48165 Münster-Hiltrup(DE)**

(72) Erfinder: **HOPPE-HÖFFLER, Monika**
**6461 Heritage**
**Aldingbrooke**
**Bloomfield, MI 48322(US)**
Erfinder: **STRAUSS, Udo**
**Wüllnerstrasse 16**
**D-4400 Münster(DE)**
Erfinder: **VOLKMANN, Bernd-Rüdiger**
**Bachstrasse 21**
**D-4400 Münster(DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

EP 0 501 970 B1

**Beschreibung**

Die Erfindung betrifft ein Verfahren zum Beschichten elektrisch leitfähiger Substrate, bei dem

(1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird.

Die Erfindung betrifft auch einen kathodisch abscheidbaren wäßrigen Elektrotauchlack.

Das oben beschriebene kathodische Elektrotauchlackierverfahren ist bekannt (vgl. z.B. DE-OS-35 18 732, DE-OS-35 18 770, EP-A-4090, EP-A-12 463 und EP-A-262 069) und wird insbesondere zur Grundierung von Automobilkarosserien eingesetzt.

Mit Hilfe des kathodischen Elektrotauchlackierverfahrens können - insbesondere bei Verwendung von Elektrotauchlacken, die kationische, aminomodifizierte Epoxidharze als Bindemittel enthalten - qualitativ hervorragende Lackierungen erhalten werden.

Zur Erhöhung der Korrosionschutzwirkung enthalten die in Rede stehenden Elektrotauchlacke Blei- und in Ausnahmefällen gegebenenfalls auch chromathaltige Pigmente. Diese Pigmente sind in gesundheitlicher und ökologischer Hinsicht nicht unbedenklich.

Die der vorliegenden Erfindung zugrundeliegende Aufgabenstellung besteht in der Bereitstellung eines Verfahrens gemäß Oberbegriff des Patentanspruchs 1, mit dem Lackierungen erhalten werden können, die auch ohne bzw. mit vermindertem Einsatz von Blei- und/oder chromathaltigen Pigmenten einen guten Korrosionsschutz bieten.

Diese Aufgabe wird überraschenderweise durch ein Verfahren gemäß Oberbegriff des Patentanspruchs 1 gelöst, bei dem der wäßrige Elektrotauchlack 1 bis 15 Gewichtsprozent elektrisch leitfähigen Ruß und/oder Graphit mit einem Primärteilchendurchmesser unter 10 $\mu$m in Kombination mit bis zu 12 Gewichtsprozent Zinkpulver oder Zink-Flakes enthält, wobei die Gewichtsprozentangaben auf die im Elektrotauchlack enthaltene Gesamtmenge an Bindemittel und - falls vorhanden - Vernetzungsmittel bezogen sind.

Die nach dem erfindungsgemäßen Verfahren hergestellten Lackierungen sind überraschenderweise den mit Hilfe von Blei- und/oder chromathaltigen Elektrotauchlacken hergestellten Lackierungen qualitativ ebenbürtig. Außerdem sind die erfindungsgemäß eingesetzten Elektrotauchlacke überraschenderweise in einem pH-Bereich von 6 bis 8 stabil.

In der DE-OS-21 01 577 wird eine Korrosionsschutzgrundierung für den Korrosionsschutz von Eisen- und Stahlteilen offenbart. Dise Korrosionsschutzgrundierung enthält ein organisches und/oder anorganisches Bindemittel, Zink, Lackhilfsmittel und Lösungs- bzw. Verdünnungsmittel und Kohlenstoff-Pigmente, wie Graphit und/oder Ruß-Pigmente. Der vor der Aufgabenstellung der vorliegenden Erfindung stehende Fachmann würde die Lehre der DE-OS 21 01 577 nicht zu Rate ziehen, weil in der DE-OS-21 01 577 keinerlei Bezug auf Elektrotauchlacke genommen wird. Außerdem soll der Pigmentierungsgrad der in der DE-OS-21 01 577 offenbarten Grundierungen in bezug auf Zink der kritischen Pigment-Volumen-Konzentration entsprechen. Elektrotauchlacke mit einem derart hohen Anteil an Zink sind instabil und liefern Lackschichten mit völlig unbefriedigenden mechanischen Eigenschaften.

In der WO-A-87/02717 wird ein Verfahren zur Herstellung eines Mehrschichtüberzugs beschrieben, bei dem auf ein elektrisch leitendes Substrat ein kathodisch abscheidbarer, mit elektrisch leitfähigem Ruß pigmentierter, wäßriger Elektrotauchlack elektrophoretisch aufgebracht, eingebrannt und erneut elektrophoretisch überbeschichtet wird. In der WO-A-87/02717 wird darauf hingewiesen, daß der Einsatz von Ruß in Elektrotauchlacken zu Oberflächenstörungen führt, die den Korrosionsschutz herabsetzen und das Aussehen sowie die physikalisch-chemischen Eigenschaften der abgeschiedenen Elektrotauchlackfilme negativ beeinflussen.

Die erfindungsgemäß eingesetzten Elektrotauchlacke enthalten außer Ruß und Zink üblicherweise mindestens ein kathodisch abscheidbares Kunstharz sowie mindestens ein Vernetzungsmittel, Pigmente, Füllstoffe, Reibharz und sonstige allgemein gut bekannte Zusätze, wie Entschäumungsmittel, Verlaufshilfsmittel usw.

Die erfindungsgemäß eingesetzten Elektrotauchlacke können prinzipiell alle für die Herstellung von Elektrotauchlacken geeigneten kathodisch abscheidbaren fremd- oder selbstvernetzenden Kunstharze enthalten. Die erfindungsgemäß eingesetzten Elektrotauchlacke können auch Mischungen unterschiedlicher kathodisch abscheidbarer Kunstharze enthalten.

Bevorzugt sind jedoch die Elektrotauchlacke, die kationische, aminmodifizierte Epoxidharze als kathodisch abscheidbare Kunstharze enthalten. Es sind sowohl selbst- als auch fremdvernetzende kationische aminmodifizierte Epoxidharze bekannt. Bevorzugt werden fremdvernetzende kationische, aminmodifizierte Epoxidharze eingesetzt.

Unter kationischen, aminmodifizierten Epoxidharzen werden kationische Reaktionsprodukte aus

a) ggf. modifizierten Polyepoxiden und

b) Aminen

verstanden.

Unter Polyepoxiden werden Verbindungen verstanden, die zwei oder mehr Epoxidgruppen im Molekül enthalten.

Besonders bevorzugte (a)-Komponenten sind Verbindungen, die herstellbar sind durch Umsetzung von

(i) einer Diepoxidverbindung oder eines Gemisches von Diepoxidverbindungen mit einem Epoxiäquivalentgewicht unter 2000 mit

(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C, gegebenenfalls in Anwesenheit eines Katalysators durchgeführt wird (vgl. DE-OS-35 18 770).

Weitere besonders bevorzugte (a)-Komponenten sind Verbindungen, die herstellbar sind durch eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Polyepoxide, die zur Herstellung der besonders bevorzugten (a)-Komponenten und auch selbst als (a)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-4(-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)2,2propan.

Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N,N'- diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentae-

EP 0 501 970 B1

rythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Als Komponente (b) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (b)-Komponenten eingesetzt.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, bevorzugt Essigsäure) erzeugt werden.

Eine weitere Möglichkeit zur Einführung kationischer Gruppen in die Komponente (a) besteht in der Umsetzung von Epoxidgruppen der Komponente (a) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugte Elektrotauchlacke werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel $R^1$-0-CO enthalten.

Der Rest $R^1$ bedeutet:

$R^1$ = $R^2$0-C0-$CH_2$-,
$R^3$-CHOH-$CH_2$-$R^4$-CHOR$^5$-CHOH-$CH_2$-
$R^2$ = Alkyl
$R^3$ = H, Alkyl, $R^6$-0-CH-$_2$ oder $R^6$-CO-O-$CH_2$-
$R^4$ = H oder Alkyl
$R^5$ = H, Alkyl oder Aryl
$R^6$ = Alkyl, Cycloalkyl oder Aryl

Bevorzugte Elektrotauchlacke werden erhalten, wenn als Vernetzungsmittel blockierte Polyisocyanate eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyana-to-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

4

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol, cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Es ist erfindungswesentlich, daß bei dem in Rede stehenden Verfahren ein Elektrotauchlack eingesetzt wird, der 1 bis 15 Gewichtsprozent elektrisch leitfähigen Ruß und/oder Graphit mit einem Primärteilchendurchmesser unter 10 $\mu$m in Kombination mit bis zu 12 Gewichtsprozent Zinkpulver oder Zink-Flakes enthält, wobei die Gewichtsprozentangaben auf die im Elektrotauchlack enthaltene Gesamtmenge an Bindemittel und - falls vorhanden - Vernetzungsmittel bezogen sind.

Als elektrisch leitfähige Ruße werden Ruße mit einer spezifischen Oberfläche von bis zu 1000 m$^2$/g (BET/N$_2$ Testmethode ASTM D 3027-78) und einem Porenvolumen von bis zu 400 ml/100 g (DBP-Adsorption Testmethode ASTM D 2414-79) eingesetzt. Bevorzugt werden Ruße mit ca. 150 m$^2$/g BETOberfläche und ca. 115 ml/100 g DBP-Adsorption eingesetzt.

Der Ruß- bzw. Graphitgehalt der erfindungemäß eingesetzten Elektrotauchlacke beträgt 1 bis 15 Gewichtsprozent, vorzugsweise 2 bis 10 Gewichtsprozent, besonders bevorzugt 4 bis 9 Gewichtsprozent, wobei die Gewichtsprozentangaben auf die im Elektrotauchlack enthaltene Gesamtmenge an Bindemittel und - falls vorhanden - Vernetzungsmittel bezogen sind.

Der Primärteilchendurchmesser des eingesetzten Rußes sollte vorzugsweise unter 0,1 $\mu$m liegen.

Beim Einsatz von Graphit sollte Graphit mit einem C-Gehalt über 95 Gew.-%, vorzugsweise über 98 Gew.-% eingesetzt werden.

Das in Kombination mit Ruß eingesetzte Zink kann in Form von Zinkstaub oder Zink-Flakes eingesetzt werden. Es wird vorzugsweise Zinkstaub eingesetzt. Obwohl nicht unbedingt notwendig, kann es in manchen Fallen zweckmäßig sein, mit Korrosionsinhibitoren behandeltes Zink einzusetzen.

Der Zinkgehalt der erfindungsgemäß eingesetzten Elektrotauchlacke beträgt bis zu 12, vorzugsweise 0,2 bis 5 Gewichtsprozent, wobei die Gewichtsprozentangaben auf die im Elektrotauchlack enthaltene Gesamtmenge an Bindemittel und - falls vorhanden - Vernetzungsmittel bezogen sind.

Die Einarbeitung des Rußes bzw. Graphits und Zinks in die Elektrotauchlacke erfolgt nach allgemein gut bekannten Methoden. Der Ruß bzw. Graphit und das Zink werden vorzugsweise in Form einer Pigmentpaste in eine wäßrige Dispersion des kathodisch abscheidbaren Harzes und - falls vorhanden - Vernetzungsmittel eingearbeitet.

Die Herstellung von Pigmentpasten ist allgemein bekannt und braucht hier nicht näher erläutert zu werden (vgl. D.H. Parker, Principles of Surface Coating Technology, Intercience Publishers, New York (1965); R.L. Yates, Electropainting, Robert Draper Ltd., Teddington/England (1966); H:F. Payne, Organix Coating Technology, Band 2, Wiley and Sons, New York (1961)).

Die Pigmentpasten können neben dem Ruß bzw. Graphit und Zink im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidiylrot und hydradisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß der fertige Elektrotauchlack die für die Abscheidung erforderlichen Eigenschaften aufweist. In den meisten Fällen beträgt das Gewichtsverhältnis zwischen Pigment und kathodisch abscheidbarem Kunstharz 0,05 bis 0,5.

Die Synthese der kathodisch abscheidbaren Kunstharze erfolgt nach gut bekannten Methoden (vgl. z.B. DE-OS-35 18 732, DE-OS-35 18 770, EP-A-4090 und EP-A-12 463) in organischen Lösungsmitteln. Die so erhaltenen Kunstharzlösungen bzw. -dispergionen werden neutralisiert und in eine wäßrige Phase überführt.

Die erfindungsgemäß eingesetzten Elektrotauchlacke können neben dem kathodisch abscheidbaren Kunstharz und der Pigmentpaste noch weitere übliche Zusatzstoffe enthalten, wie z.B. Zusatzlösemittel, Antioxidantien, oberflächenaktive Mittel usw.

Der Festkörper der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 6 und 8, vorzugsweise zwischen 6,5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung wäßriger Kunstharzdispersionen auf Basis kationischer aminmodifizierter Epoxidharze

1.1 Herstellung einer Dispersion gemäß Beispiel B der EP-A-70550

|  | Einwaage (g) |
|---|---|
| – Epikote 829[1] | 727,6 |
| – Capa 200[2] | 268,4 |
| – Xylol | 36,1 |
| – Bisphenol A | 197,8 |
| – Dimethylbenzylamin | 3,8 |
| – Isocyanatvernetzer[3] | 901,3 |
| – Diketimin aus MIBK und Diethylentriamin 75%ig in MIBK | 73,4 |
| – N–Methylethanolamin | 59,1 |
| – Hexylglykol | 76,5 |
| – Essigsäure | 33,5 |
| – Emulgatorgemisch[4] | 29,4 |
| – Deionisiertes Wasser | 1793,1 |

[1] Epoxidharz der Shell Chemie, Epoxidäquivalent 188

[2] Polyesterdiol der Interox Chemical

[3] Isocyanatvernetzer auf Basis Toluylendiisocyanat mit Butylglykolverkappung und Umsetzung mit Trimethylolpropan im Verhältnis 3 : 1, angelöst in einer Mischung aus MIBK und n-Butanol (9 : 1) zu 70 % Festkörper

[4] Emulgatorgemisch auf Basis von Geigy Amin C (Geigy Industrial Chemicals) 120 Teile, Surfynol 104 (Air Products and Chemicals) 120 Teile, Butylglykol 120 Teile und 221 Teile deionisiertes Wasser mit 19 Teilen Eisessig.

MIBK = Methylisobutylketon

Herstellvorschrift

Epikote 829, Capa 200 und Xylol werden in einem Reaktionsgefäß vorgelegt und unter $N_2$-Schutzgas auf 210°C erhitzt. Während einer halben Stunde wird dann Wasser ausgekreist. Danach kühlt man den Ansatz auf 150°C ab, gibt Bisphenol A und 1,6 Teile Dimethylbenzylamin zu. Man erhitzt dann auf 180°C und hält diese Temperatur eine halbe Stunde. Danach kühlt man auf 130°C und gibt die Restmenge Dimethylbenzylamin zu. Danach hält man die Temperatur für 2 1/2 Stunden, gibt dann den Isocyanatvernetzer, das Diketimin und N-Methylethanolamin zu und hält dann die Temperatur für eine halbe Stunde bei 110°C. Danach fügt man das Hexylglykol zu. Die Reaktionsmischung wird dann in dem deionisierten Wasser, das Eisessig und Emulgatorgemisch enthält, dispergiert. Anschließend wird Vakuum angelegt, um die leicht flüchtigen organischen Lösemittel zu entfernen. Es wird ein Festkörper von 36 % eingestellt.

## 2. Herstellung einer Zink-, Ruß- und Katalysatorpaste

### 2.1 Herstellung eines Reibharzes

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80%iger, wäßriger Milchsäure gegeben. Man führt die Reaktion bei 80°C durch, bis die Säurezahl unter 1 gefallen ist.

### 2.2 Herstellung einer Zinkpaste

2000 Teile des Reibharzes werden mit 400 Teilen Butylglykol verdünnt. In diese Lösung werden 1000 Teile Zinkpulver (Zincoli Superfein 620 W®) gegeben. Anschließend wird gut gerührt und in einer Sandmühle bis zu einer Hegman-Feinheit von ≤ 10 μm dispergiert.

### 2.3 Herstellung einer Rußpaste

1800 Teile des Reibharzes werden mit 300 Teilen Butylglykol und 2800 Teilen destilliertem Wasser verdünnt. 1100 Teile Ruß (CORAX L®, Degussa) werden langsam Zugegeben. Nach gründlichem Vermengen wird die Mischung in einer Sandmühle bis zu einer Hegman-Feinheit von unter 10 μm dispergiert.

### 2.4 Herstellen einer Katalysatorpaste

23,4 Teile Reibharz, 32,9 Teile Dibutylzinnoxid und 43,7 Teile entionisiertes Wasser werden gut gemischt und in einer geeigneten Sandmühle bis zu einer Kornfeinheit von unter 7 μm dispergiert.

### 3. Zubereitung erfindungsgemäßer Elektrotauchlackbäder und Abscheidungen

Aus der Dispersion gemäß 1.1, der Zinkpaste gemäß 2.2, der Rußpaste gemäß 2.3 und gegebenenfalls zusätzlichem Reibharz gemäß 2.1 werden Elektrotauchlackbäder so eingewogen, daß sie stets 15,1 Gewichtsprozent organischen Feststoffgehalt (Bindemittel plus Isocyanatvernetzer plus Reibharz) aufweisen. Das Verhältnis von Reibharz zu Bindemittel plus Isocyanatvernetzer beträgt stets 1 : 2,1.
Außerdem enthalten alle Bäder jeweils 0,2 Gew.-% Dibutylzinnoxid. Es wird in Form der Katalysatorpaste zugegeben. Die erhaltenen Bäder weisen somit einen Feststoffgehalt von 15,3 Gewichtsprozent auf. Es werden 4 verschiedene Elektrotauchlackbäder hergestellt, die folgende Ruß- und Zinkgehalte aufweisen.
Bad Nr. 1 9,8 Gew.-% Ruß (kein Zink)
Bad Nr. 2 9,8 Gew.-% Ruß und 9,8 Gew.-% Zink
Bad Nr. 3 4,8 Gew.-% Ruß und 2,9 Gew.-% Zink
Bad Nr. 4 4,9 Gew.-% Ruß und 12,0 Gew.-% Zink
Die obigen Gewichtsprozentangaben beziehen sich auf den Feststoffgehalt von 15,3 Gew.-%, der als 100 % gesetzt wird. Um das o.g. Verhältnis von Reibharz zu Bindemittel plus Isocyanatvernetzer einhalten zu können muß in einigen Fällen eine entsprechende Menge an Reibharz zugegeben werden.
Die Abscheidung der Lackfilme erfolgt auf St 1405 Stahlblechen bei 27°C und 250 V Abscheidespannung innerhalb von 2 Minuten. Anschließend wird bei Raumtemperatur getrocknet und 20 Minuten bei 180°C eingebrannt. Die Schichtdicken sollen etwa 20 μm betragen. In manchen Fällen kann es notwendig sein, den Bädern zur Erreichung der gewünschten Schichtdicke Lösemittel, wie z.B. Butylglykol und Phenoxypropanol zuzugeben.

Die mit den Bädern 1, 2 und 3 erhaltenen Lackfilme werden einem Salzsprühtest nach DIN 50021 über eine Dauer von 360 Stunden unterworfen. Die Auswertung der Ergebnisse erfolgt nach DIN 53 167. Die mit Bad 1 erhaltenen Lackfilme zeigen eine Unterwanderung von $W_d$ = 5,2 mm. Die mit den Bädern 2 und 3 erhaltenen Lackfilme zeigen demgegenüber nur eine Unterwanderung von $W_d$ = 1,2 mm bzw. $W_d$ = 1,9 mm und weisen somit eine bedeutend höhere Korrosionsbeständigkeit auf als die mit Bad 1 erhaltenen Lackfilme. Typische bleipigmenthaltige Elektrotauchlackbäder liefern Filme mit $W_d$-Werten von 1,2 bis 2 mm.

Die mit Bad 3 erhaltenen Filme werden einem Reverse Impact-Test nach ASTM D 2794/69 und einer Biegung am konischen Dorn nach ISO 6860 unterzogen.

Ergebnisse: 10 inch-pound und 0 cm. Typische bleipigmenthaltige Elektrotauchlackbäder liefern Filme mit Reverse Impact-Werten von 4 bis 10 inch-pound und Dornbiegungswerten von 0 bis 1 cm.

Bad Nr. 4 wird hinsichtlich der Badstabilität untersucht. Nach 44 Tagen hat sich kein Bodensatz gebildet. Nur 2,5 Gewichtsprozent des eingesetzten Zinks haben sich in der wäßrigen Phase gelöst.

## Patentansprüche

1. Verfahren zum Beschichten elektrisch leitfähiger Substrate, bei dem

(1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird,

dadurch gekennzeichnet, daß der wäßrige Elektrotauchlack 1 bis 15 Gewichtsprozent elektrisch leitfähigen Ruß und/oder Graphit mit einem Primärteilchendurchmesser unter 10 $\mu$m in Kombination mit bis zu 12 Gewichtsprozent Zinkpulver oder Zink-Flakes enthält, wobei die Gewichtsprozentangaben auf die im Elektrotauchlack enthaltene Gesamtmenge an Bindemittel und - falls vorhanden - Vernetzungsmittel bezogen sind.

2. Kathodisch abscheidbarer wäßriger Elektrotauchlack, dadurch gekennzeichnet, daß er 1 bis 15 Gewichtsprozent elektrisch leitfähigen Ruß und/oder Graphit mit einem Primärteilchendurchmesser von unter 10 $\mu$m in Kombination mit bis zu 12 Gewichtsprozent Zinkpulver oder Zink-Flakes enthält, wobei die Gewichtsprozentangaben auf die im Elektrotauchlack enthaltene Gesamtmenge an Bindemittel und - falls vorhanden - Vernetzungsmittel bezogen sind.

3. Verfahren oder Elektrotauchlack nach Anspruch 1 oder 2, dadurch gekennzeichnet, daß der Elektrotauchlack ein kationisches, aminmodifiziertes Epoxidharz als Bindemittel enthält.

4. Verfahren oder Elektrotauchlack nach einem der Ansprüche 1 bis 3, dadurch gekennzeichnet, daß der Elektrotauchlack ein blockiertes Polyisocyanat als Vernetzungsmittel enthält.

## Claims

1. Process for coating electrically conductive substrates, in which

(1) the electrically conductive substrate is immersed in an aqueous electrodeposition paint

(2) the substrate is connected as the cathode

(3) a film is deposited on the substrate by direct current

(4) the coated substrate is removed from the electrodeposition paint and

(5) the deposited paint film is baked,

characterized in that the aqueous electrodeposition paint contains 1 to 15 per cent by weight of electrically conductive carbon black and/or graphite having a primary particle diameter of less than 10 $\mu$m in combination with up to 12 per cent by weight of zinc powder or zinc flakes, with the percentages by weight relating to the total amount of binder and - if present - crosslinking agent contained in the electrodeposition paint.

2. Aqueous, cathodically depositable electrodeposition paint which contains 1 to 15 per cent by weight of electrically conductive carbon black and/or graphite having a primary particle diameter of less than 10 µm in combination with up to 12 per cent by weight of zinc powder or zinc flakes, with the percentages by weight relating to the total amount of binder and - if present -crosslinking agent contained in the electrodeposition paint.

3. Process or electrodeposition paint according to Claim 1 or 2, characterized in that the electrodeposition paint contains a cationic, amine-modified epoxy resin as binder.

4. Process or electrodeposition paint according to any of Claims 1 to 3, characterized in that the electrodeposition paint contains a masked polyisocyanate as crosslinking agent.

**Revendications**

1. Procédé pour l'enduction de supports conducteurs de l'électricité, dans lequel
   (1) le support conducteur de l'électricité est plongé dans un vernis électrophorétique aqueux
   (2) le support fait office de cathode
   (3) une pellicule est déposée sur le support au moyen d'un courant continu
   (4) le support enduit est retiré du vernis électrophorétique et
   (5) la pellicule de vernis déposée est cuite,
   caractérisé en ce que le vernis électrophorétique aqueux contient de 1 à 15 pour cent en poids de noir de carbone et/ou de graphite conducteurs de l'électricité ayant un diamètre des micelles inférieur à 10 µm en combinaison avec jusqu'à 12 pour cent en poids de poudre de zinc ou de paillettes de zinc, les données de pourcentage en poids se rapportant à la quantité totale de liant et - au cas où il serait présent - d'agent réticulant, contenue dans le vernis électrophorétique.

2. Vernis électrophorétique aqueux déposable à la cathode, caractérisé en ce qu'il contient de 1 à 15 pour cent en poids de noir de carbone et/ou de graphite conducteurs de l'électricité ayant un diamètre de particule primaire inférieur à 10 µm en combinaison avec jusqu'à 12 pour cent en poids de poudre de zinc ou de paillettes de zinc, les données de pourcentage en poids se rapportant à la quantité totale de liant et - au cas où il serait présent - d'agent réticulant, contenue dans le vernis électrophorétique.

3. Procédé ou vernis électrophorétique selon la revendication 1 ou 2, caractérisé en ce que le vernis électrophorétique contient en tant que liant une résine époxy cationique modifiée par une amine.

4. Procédé ou vernis électrophorétique selon l'une quelconque des revendications 1 à 3, caractérisé en ce que le vernis électrophorétique contient en tant qu'agent réticulant un polyisocyanate bloqué.